# EUROPEAN PATENT SPECIFICATION

(11) **EP 0 530 947 B1**
(45) Date of publication and mention of the grant of the patent: **31.01.1996**
(21) Application number: 92304725.2
(22) Date of filing: 26.05.1992
(51) Int. Cl.: F16K 41/12, F16K 7/16

(54) **Fluid flow controller**
Durchflussregler
Dispositif de réglage de débit

(30) Priority: 26.08.1991 JP 240346/91
(43) Date of publication of application: 10.03.1993
(73) Proprietor: Kiyohara, Masako, Kumamoto-shi Kumamoto-ken (JP)
(72) Inventor: Yamaji, Michio, Nishi-ku, Osaka (JP); Yamamoto, Kenji, Nishi-ku, Osaka (JP)
(74) Representative: Daley, Michael John

(56) References cited:
- AU-A- 43 696
- FR-A- 2 317 577
- US-A- 3 250 511

## Description

The present invention relates to a fluid flow-controller for use in fluid pipe lines provided in for example semiconductor producing apparatuses or nuclear power plants. The fluid flow-controller uses the resilient flexing of a diaphragm to open and close the flow passage.

The diaphragm being secured about the periphery seals the valve chamber and does not permit any leakage of gases. The valves are thus widely used in conduits for transporting high-purity gases in semiconductor producing apparatuses.

In the accompanying drawings:-
Figure 1 is a longitudinal cross-sectional view of the fluid-controller in accordance with the first embodiment of the present invention;
Figure 2 is an enlarged longitudinal cross-sectional view of a substantial part of the fluid-controller of the first embodiment;
Figure 3 is a longitudinal cross-sectional view of the fluid-controller in accordance with the second embodiment of the present invention;
Figure 4 is an enlarged longitudinal cross-sectional view of a substantial part of the fluid-controller of the second embodiment;
Figure 5 is a longitudinal cross-sectional view of a conventional fluid-controller, and
Figure 6 is a longitudinal cross-sectional view of another conventional fluid-controller.

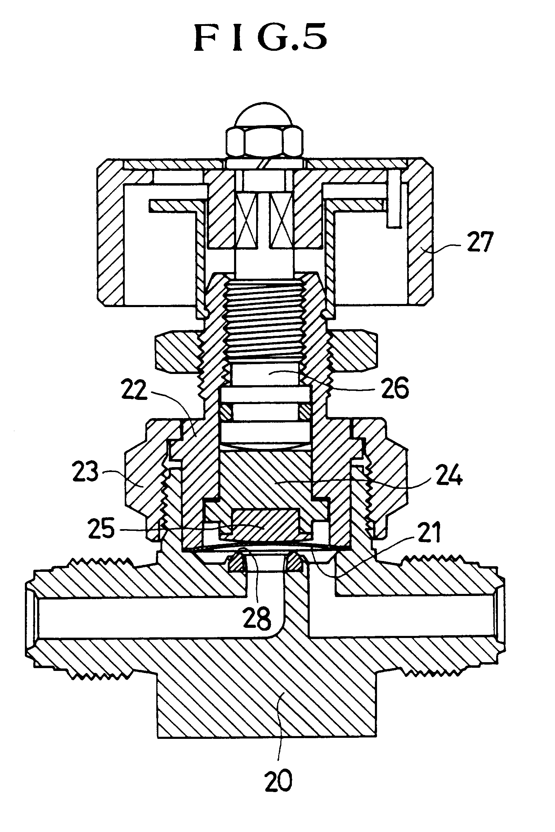

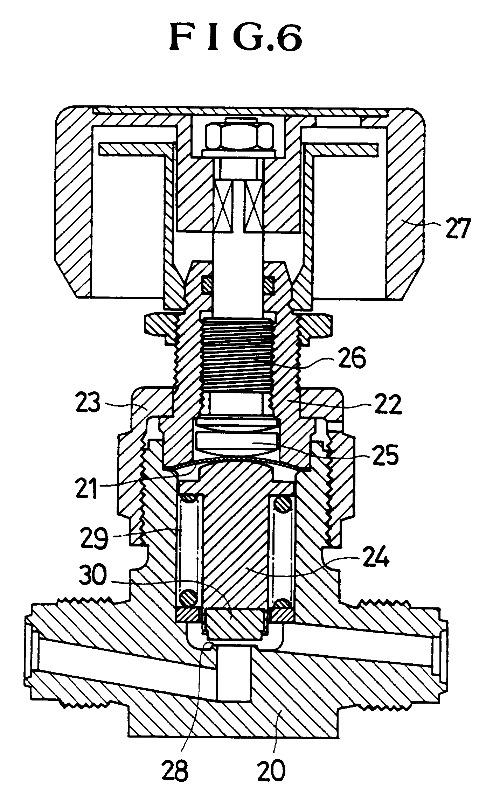

Conventional valves of this type are shown in Figures 5 and 6.

Thus a known fluid-controller in Figure 5 comprises a body 20, a diaphragm 21, a cover or bonnet 22, a bonnet nut 23, a disc 24, a diaphragm presser 25, a stem 26, and handle 27. When the stem 26 is lowered, the diaphragm 21 is pressed down at its central portion by the disc 24 and diaphragm presser 25 so as to abut against a valve seat 28. When the stem 26 is elevated, the diaphragm 21 is urged by its resiliency and fluid pressures to move away from the valve seat 28.

In Figure 6 the fluid-controller comprises a body 20, a disc 24, a spring 29, a diaphragm 21, a bonnet 22, a bonnet nut 23, a diaphragm presser 25, a stem 26 and a handle 27. When the stem 26 is lowered, the diaphragm 21 is pressed down at its central portion by the diaphragm presser 25 to lower the disc 24 until a disc packing 30 of the disc 24 is abutted against a valve seat 28. When the stem 26 is elevated, the disc 24 is biassed upwardly by the resiliency of the spring 29 so as to clear the valve seat 28.

Above-described fluid-controllers are excellent in practical performance in that it is perfectly free from leakage of fluid from the valve chamber, i.e. the chamber above the inlet and outlet ports.

With said fluid-controllers, the stem 26 is threadedly movable, the stem 26 being limited for its downward movement by bringing the diaphragm 21 or disc 24 into contact with the valve seat 28. If the stem 26 is excessively tightened while a valve is closed, the stem 26 may go down beyond the desired limit, so that the diaphragm 21 is most likely to be strongly held by and between the valve seat 28 and the diaphragm presser 25 or the disc 24 and the diaphragm presser 25, with the result that the diaphragm 21 often very thin, may suffer from injury or breakage, which will shorten the life of the diaphragm 21 to a great extent. Au-A-43 696 provides a valve of this type having stop means acting between the stem and fixed structure on the valve which co-operate to limit further closing movement of the stem when the flow passage is closed by the diaphragm.

When the stem is lowered, the central portion of the diaphragm will be urged downward to abut directly against the valve seat, or the diaphragm serves to press down the disc to bring it in contact with the valve seat. This may render the fluid-controller closed. Stop means prevent excessive tightening.

When the stem is lifted the diaphragm is displaced upward by its resiliency or fluid pressure to clear the valve seat, or the disc is pushed upward by the resiliency of the spring until it moves away from the valve seat. Thus the controller is in the open condition.

Further to absorb excessive tightening pressure a valve in accordance with the invention is characterised in that the diaphragm is made of a metallic sheet while a valve seat and/or a diaphragm presser are/is made of synthetic resin.

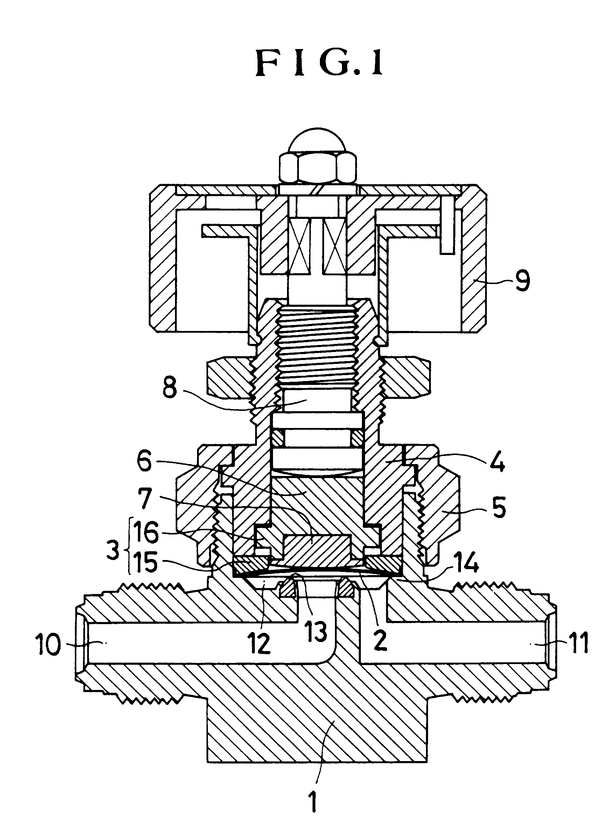

Embodiments of the present invention will be described with reference to Figures 1 to 4 of the drawings.

Figure 1 is a longitudinal cross-sectional view of a fluid-controller in accordance with a first embodiment of the present invention. Said fluid-controller is intended to abut a diaphragm 2 directly and to move it into and out of engagement with a valve seat 13 for taking opening and closing positions. The numeral 1 designates the valve body, 2 a diaphragm, 3 a stop mechanism, 4 a cover or bonnet, 5 a bonnet nut, 6 a disc, 7 a diaphragm presser, 8 a stem, and 9 a handle.

The body 1 is made of a metal material such as stainless steel substantially in the shape of a cross, having fluid inlet and outlet ports 10, 11 formed at the opposite sides, and an internal sunken valve chamber 12 opened at its top and provided in the upper portion of the body 1 so as to communicate with said fluid inlet and outlet ports 10, 11. Said valve chamber 12 has a valve seat 13 made of synthetic resin substantially embedded in the bottom thereof, and a step portion 14 formed on the inner and lower side of the valve chamber 12. In this embodiment, the valve seat 13 of synthetic resin is separated from the body 1, but it may be formed integral with the body 1.

The diaphragm 2 is disposed above the valve seat 13, acting to keep the valve chamber 12 airtight and having a central portion which may move in a vertical direction so as to move into and away from the contact with the valve seat 13. In the embodiment, the diaphragm 2 is made of a metallic sheet such as stainless steel, INCONEL (Trade Mark), or shaped memory alloy, having a saucer-like form and being protuberant at its central portion, with its circumferential edge resting on the step portion 14 formed on the inside of the valve chamber 12 so as to be clamped by the lower end of the bonnet 4 received by the valve chamber 12.

The bonnet 4, which is shaped in a cylindrical form, is inserted into the valve chamber 12 so that it is fixedly pressed by tightening the bonnet nut 5 toward the body 1. The bonnet 4 has a large-diametered inner circumference at the lower end.

The disc 6 is mounted on the inside of the lower end of the bonnet 4 in such a manner that it is movable in a vertical direction, and the lower end of the disc 6 has a diaphragm presser 7 made of synthetic resin and abutting against the central portion of the diaphragm 2.

The stem 8 is threadedly and elevatably mounted within the bonnet 4 in order to have the lower end face thereof contact with the disc 6, so that the stem 8 may press the disc 6 downward to bring the central portion of the diaphragm 2 into contact with the valve seat 13 through the diaphragm presser 7. The handle 9 for operating the stem 8 is secured to the upper end of the stem 8.

The stop mechanism 3 is interposed between a part of the body 1 near the circumferential edge of the diaphragm 2 and the lower end of the stem 8, so that it may serve to limit the downward movement of the stem 8 when the fluid controller is fully closed (i.e. when the central portion of the diaphragm 2 is in contact with the valve seat 13).

With the instant embodiment, the stop mechanism 3 comprises an annular step 15 interposed between the upper surface of the circumferential edge of the diaphragm 2 and the lower end of the bonnet 4, and a rim 16 formed integral with the outer peripheral face of the lower end of the disc 6 and received within the lower end of the bonnet 4 to be contacted with the upper surface of the step 15. The inner diameter of the step 15 is made a little smaller than that of the inner peripheral face of the lower end of the bonnet 4, and a distance formed between the step 15 and the rim 16 is so determined as to allow contact of the step 15 and the rim 16 at the time the diaphragm 2 pressed down by the falling disc 6 has rested on the valve seat 13.

The operation of said fluid controller will now be described.

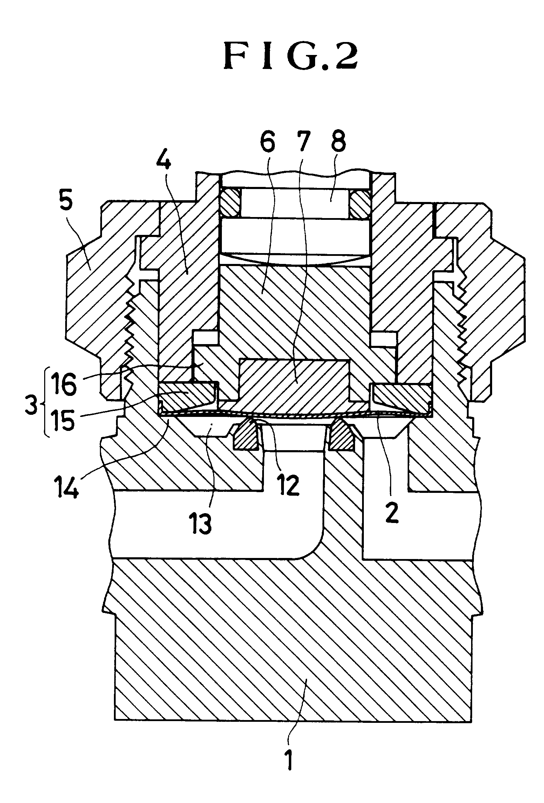

To place the fluid controller in the closed position, the stem 8 is lowered by turning the handle 9. Then, the disc 6 and the diaphragm presser 7 go downward to press down the central portion of the diaphragm 2, whereby the diaphragm 2 will be resiliently deformed as shown in Figure 2 to abut the valve seat 13, which results in the closed position of the fluid-controller. This particular fluid-controller is arranged such that the downward movement of the stem 8 is restricted by the contact between the upper surface of the step 15 and the locking rim 16 formed in the disc when the diaphragm 2 is brought in contact with the valve seat. This prevents excessively strong tightening, and thus avoids any injury or breakage of the diaphragm 12 due to such a too strong tightening.

For returning the fluid-controller to the open position, stem 8 is elevated by rotating the handle 9. Then, the diaphragm 2 resumes its original form by aid of its resiliency and a fluid pressure as the diaphragm 3 swells in accordance with elevation of the disc 6 and diaphragm presser 7, leaving the valve seat 13 with the consequential opening of the valve.

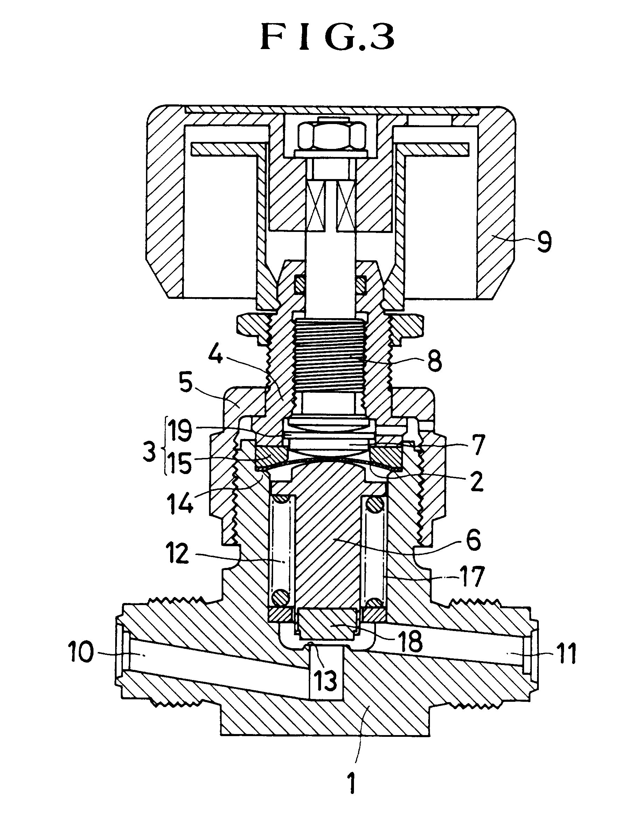

Figure 3 is a longitudinal cross-sectional view showing a fluid-controller in accordance with a second embodiment of the present invention. In this fluid-controller the diaphragm presser 7 is elevatably disposed above the diaphragm 2, while a piston or disc 6 is elevatably disposed below the diaphragm 2, and a spring 17 is interposed between the disc 6 and the body 1. When the central portion of the diaphragm 2 is pressed down by the diaphragm presser 7, the disc 6 is lowered to provide for an engagement of the valve seat 13 with a disc packing 18 provided in the disc 6. When the pressure is relieved, the resiliency of the spring 17 causes the disc 6 to go upward so as to enable the disc packing 18 to leave the valve seat 13. Furthermore, there is provided the stop mechanism 3 between a part of the body 1 near the circumferential edge of the diaphragm 2 and the lower end of the stem 8 for limiting the downward movement of the stem 8 when the fluid-controller is fully closed (i.e. when the disc packing 18 abuts against the valve seat 13). The other arrangements are substantially the same as that of the first embodiment. Referring to Figure 3, the numeral 1 is a body, 4 a bonnet, 5 a bonnet nut, 8 a stem, 9 a handle, 10 a fluid inlet port, 11 a fluid outlet port, 12 a valve chamber, and 14 a step portion.

The stop mechanism 3 comprises an annular step 15 interposed between the upper surface of the circumferential edge of the diaphragm 2 and the lower end of the bonnet 4, and a disc-like diaphragm pressing plate 19 positioned between the diaphragm presser 7 and the stem 8 and intended to abut against the upper surface of the step 15. The inner diameter of the step 15 is made a little smaller than that of the lower end of the bonnet 4 and a clearance is formed between the step 15 and the diaphragm pressing plate 19 such that the step 15 and the diaphragm pressing plate 19 may be placed in engagement with each other when the disc packing 18 is urged by the downward movement of the diaphragm presser 7 and disc 6 to make contact with the valve seat 13.

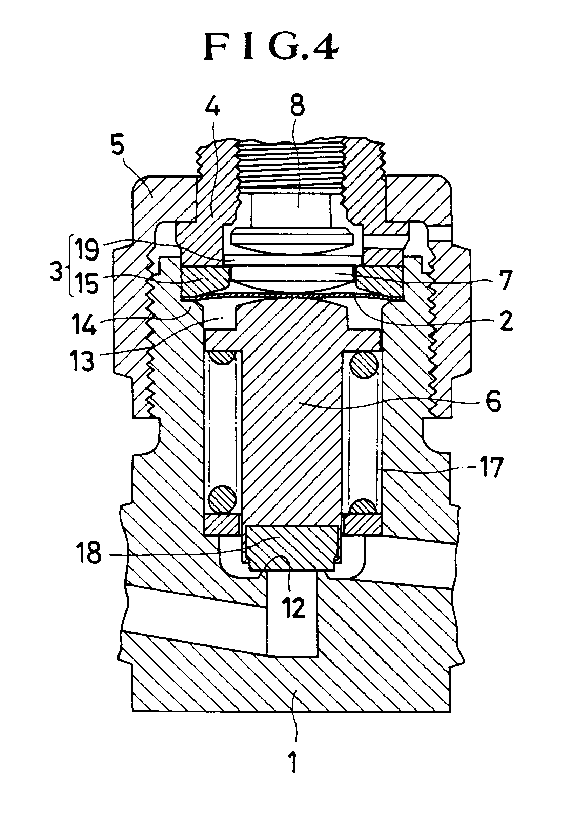

In order to place said fluid-controller in the closed position, the stem 8 is lowered by roating the handle 9. Then, the diaphragm pressing plate 19 and the diaphragm presser 7 function to press down the central portion of the diaphragm 2 and the disc 6 as well against the resiliency of the spring 17 until the disc packing 18 provided in the disc 6 is engaged with the valve seat 13, which results in the closed position of the fluid-controller. Also in this fluid-controller, when the fluid-controller is in the closed position (see Figure 4), the diaphragm pressing plate 19 acts to engage with the step 15 so as to limit the downward movement of the stem 8. This may prevent an excessively strong tightening, thus avoiding any injury or breakage from which the diaphragm 2 may suffer due to such a strong tightening. If the fluid-controller is placed in the opened position, the stem 8 will be elevated by steering the handle 9. Then, the disc 6 is elevated by the resiliency of the spring 17 and the fluid pressure, so that the disc packing 18 leaves the valve seat 13, in a manner which will lead to the opened position.

Thus as described above, in accordance with the fluid-controller of the present invention, an arrangement is made such that the stopper mechanism is positioned between the body near the circumferential edge of the diaphragm and the lower end of the stem for limiting the downward movement of the stem when the fluid-controller is in fully closed position; therefore, even if the stem is of a threadedly-movable design, too much strong tightening will never occur in the closed position. Thus avoiding any injury or breakage from which the diaphragm may suffer due to such a strong tightening. This ensures a considerable increase of life for the diaphragm.

## Claims

1. A fluid flow controller comprising a flow passage which is opened and closed by the flexing of a diaphragm (2) secured around the periphery wherein the flexing is effected by movement of a valve stem and includes stop means acting between the stem and fixed structure on the valve which co-operate to limit further closing movement of the stem when the flow passage is closed by the diaphragm (2), characterised in that the diaphragm (2) is made of a metallic sheet while a valve seat (13) and/or a diaphragm presser (7) are/is made of synthetic resin.

2. A controller according to Claim 1, wherein the diaphragm (2) opens and closes the flow passage through the intermediary of an abutment part (6, Figure 4).

## Patentansprüche

1. Durchflußregler mit einem Strömungskanal, der durch die flexiblen Bewegungen einer Membrane (2) zu öffnen und zu schließen ist, die entlang ihrem Außenumfang eingespannt ist und deren flexiblen Bewegungen durch die Verstellbewegungen eines Ventilstössels bewirkt werden, wobei ein Anschlagmittel vorgesehen ist, das zwischen dem Stössel und einem gehäusefesten Teil des Ventils wirkt, um weitere Schließbewegungen des Ventilstössels zu verhindern, wenn der Strömungskanal durch die Membrane (2) verschlossen ist, dadurch gekennzeichnet, daß die Membrane (2) eine Metallplatte ist, während ein Ventilsitz (13) und/oder ein auf die Membrane einwirkendes Druckelement (7) aus Kunstharz bestehen bzw. besteht.

2. Durchflußregler nach Anspruch 1, bei dem die Membrane (2) den Strömungskanal unter Einschaltung eines Anschlagteiles (6, Fig. 4) öffnet und schließt.

## Revendications

1. Un dispositif de réglage de débit de fluide comprenant un passage d'écoulement qui est ouvert et fermé par la flexion d'un diaphragme (2) fixé autour de la périphérie dans lequel la flexion est effectuée par le mouvement d'une tige de vanne et comprend des moyens d'arrêt agissant entre la tige et la structure fixe de la vanne qui coopèrent pour limiter un mouvement de fermeture supplémentaire de la tige lorsque le passage d'écoulement est fermé par le diaphragme (2), caractérisé en ce que le diaphragme (2) est réalisé en tôle métallique tandis qu'un siège de vanne (13) et/ou un dispositif de pression (7) du diaphragme sont/est réalisé(s) en résine synthétique.

2. Un dispositif de réglage de débit de fluide selon la revendication 1, dans lequel le diaphragme (2) ouvre et ferme le passage d'écoulement par l'intermédiaire d'une pièce de butée (6, figure 4).
